Europäisches Patentamt

European Patent Office

Office européen des brevets

(19)

(11) Publication number: **0 213 840 B1**

# EUROPEAN PATENT SPECIFICATION

(45) Date of publication of patent specification: **16.10.91**    (51) Int. Cl.⁵: **C01B 3/16, C01B 3/14**

(21) Application number: **86306229.5**

(22) Date of filing: **12.08.86**

(54) **Hydrogen production.**

(30) Priority: **30.08.85 GB 8521649**

(43) Date of publication of application:
**11.03.87 Bulletin 87/11**

(45) Publication of the grant of the patent:
**16.10.91 Bulletin 91/42**

(84) Designated Contracting States:
**AT BE CH DE FR GB IT LI LU NL SE**

(56) References cited:
**EP-A- 0 157 480**
**FR-E- 92 927**
**US-A- 3 825 501**

**CHEMICAL ABSTRACTS, vol. 101, no. 18, October 1984, page 130, abstract no. 154273g, Columbus, Ohio, US; & JP-A-59 128 201 (TOYO ENGINEERING CO., LTD) 24-07-1984**

(73) Proprietor: **IMPERIAL CHEMICAL INDUSTRIES PLC**
**Imperial Chemical House, Millbank**
**London SW1P 3JF(GB)**

(72) Inventor: **Pinto, Alwyn**
**18 Cambridge Road Linthorpe**
**Middlesbrough Cleveland(GB)**
Inventor: **Jeffery, Ian Charles**
**51 Wandsford Close Ovington Farm Estate**
**Low Grange Billingham Cleveland(GB)**

(74) Representative: **Gratwick, Christopher et al**
**Imperial Chemical Industries PLC Legal Department: Patents PO Box 6 Bessemer Road Welwyn Garden City Herts, AL7 1HD(GB)**

## Description

This invention relates to the production of hydrogen containing gas streams and in particular to the production of hydrogen by the catalytic "shift" reaction wherein carbon monoxide is reacted with steam in the presence of a catalyst to give hydrogen and carbon dioxide.

This reaction is operated on a large scale in a variety of forms, according, inter alia, to the temperature at which it is conducted, the inlet carbon monoxide content, and the presence or absence of sulphur compounds. Most commonly, as in an ammonia plant wherein the synthesis gas is derived from a hydrocarbon feedstock by steam reforming, the shift reaction is carried out in single adiabatic catalyst beds, usually with a first stage having an outlet temperature in the range 400 to 500° C followed by cooling by indirect heat exchange, and then in a second stage using an outlet temperature under 300° C. Where the carbon monoxide content of the inlet gas stream is too high, for example as in plants based on the partial oxidation of carbonaceous feedstocks, to permit operation in a single adiabatic bed, then such beds are usually subdivided and some cooling is provided between the parts of the bed.

In our earlier application now published as EP-A-157480 there is described a process sequence for making ammonia synthesis gas including a shift stage operated in indirect heat exchange with a coolant, especially water under pressure. EP-A-157480 indicates that the shift reaction can advantageously be brought to equilibrium at a temperature typically in the range 230 to 280° C, with an outlet temperature 10 to 30° C lower than the inlet temperature to give a gas stream containing 0.1 to 1% by volume of carbon monoxide. Such an outlet temperature corresponds to an inlet temperature in the range 240 to 310° C and is convenient for the heat recovery requirements in and upstream of the shift stage: we have devised a shift process that is particularly suitable for use in that process.

It has been proposed in GB-A-1267603 to carry out the shift reaction at a temperature in the range 150 to 290° C in the presence of a copper containing catalyst in an externally cooled tubular reactor. This reference indicates that the carbon monoxide content of the inlet gas stream can be as high as 30% by volume and yet only a single stage is necessary. The reference indicates that the temperature is preferably in the range 180 to 230° C. In the specific example it is indicated that the temperature does not exceed 230° C at any point in the catalyst bed.

It has been proposed in US-A-3825501 to effect the shift reaction in a reactor having, in process sequence, adiabatic (A), isothermal (I), and equilibrium-limited (E) Zones. The isothermal zone (I) is provided with a heat exchanger through which an external coolant is passed and the equilibrium-limited zone (E) is provided with a heat exchanger through which the feed is passed to effect preheating thereof before entry of the feed into the adiabatic zone (A). This reference is primarily concerned with high temperature shift using iron oxide/chromium oxide catalysts and in the specific embodiment exemplified, where the wet gas flow rate was about 4370 kmol.h$^{-1}$, the external coolant was steam at 316° C, and the feed fed as coolant to the equilbrium-limited zone heat exchanger was at 210° C, the conditions were as follows:

| | Temperature (° C) | | CO content (% dry basis) | | Heat exchange area (m$^2$) | Catalyst volume (m$^3$) |
|---|---|---|---|---|---|---|
| | in | out | in | out | | |
| Zone A | 368 | 499 | 48.7 | 11.9 | - | 11 |
| Zone I | 499 | 499 | 11.9 | 6.3 | 71 | 5 |
| Zone E | 499 | 357 | 6.3 | 3.3 | 418 | 28 |

We have realised that the shift reaction can be effected to give a low carbon monoxide content gas in a single stage using a copper based catalyst at the outlet temperatures in the range 230 to 280° C desired for the process of EP-A-157480 by using a high heat exchange area to catalyst volume ratio and a high gas flow rate.

Accordingly the present invention provides a process for the production of a hydrogen containing gas stream comprising subjecting a raw gas containing steam, carbon dioxide, hydrogen, and carbon monoxide, and having a carbon monoxide contant of at least 8% by volume on a dry basis, to the shift reaction to reduce the carbon monoxide content to less than 1% by volume on a dry basis by passing the gas stream, at a superatmospheric pressure, in a single stage through a bed of a catalyst containing copper metal and at least one oxidic support material at an outlet temperature in the range 230 to 280° C, said bed being equipped with heat exchange tubes and/or plates providing 30 to 200 m$^2$ of heat exchange surface contacted by the gas stream within the catalyst bed per $m^3$ of catalyst, the coolant on the cold side of such tubes and/or plates is boiling water, and the gas flow rate through the catalyst is in the range 200 to 800 kmol per hour per $m^3$ of catalyst.

The process is operated at superatmospheric pressure, preferably at above 3 bar abs., and especially at above 30 bar abs.

The inlet temperature is preferably in the range 240 to 310°C and the outlet temperature is 10 to 30°C lower than the inlet temperature. In this case a substantial part of the reaction, for example down to a carbon monoxide content in the range 2 to 3% by volume on a dry basis, can be effected at temperatures at which the reaction is very fast, so that flow rates in the higher part of the stated range, for example above 700 $kmol.h^{-1}.m^{-3}$, can be used: where the flow rate is above 300 $kmol.h^{-1}.m^{-3}$, the heat transfer surface is preferably above 50 $m^2.m^{-3}$. This form of the invention, wherein the outlet temperature is 10 to 30°C lower than the inlet temperature, is of particular utility in a process wherein, upstream of the shift stage, a desulphurised reformable hydrocarbon feedstock is reacted with steam, and also possibly with a gas containing nitrogen and oxygen, for example air, in one or more stages over one or more catalysts so as to reach, or approach, equilibrium at a temperature in the range 750 to 1000°C, and heat is recovered from the resulting hot gas. Usually sufficient steam is introduced before such high temperature reactions to provide the steam required in the process of the invention although more steam may be added prior to the shift stage if desired. In this type of process, the carbon monoxide content of the gas stream entering the shift stage is typically up to 15% by volume on a dry basis.

In an alternative form of the process of the invention, the inlet temperature is in the range 100 to 240°C and the catalyst bed includes an inlet zone in which the reaction is relatively slow and, indeed, if the inlet temperature is low enough, in which the main effect is preheating of the reactants by heat transfer from the boiling water. Since in such a preheat zone, the boiling water is on the hot side rather than the cool side, the heat transfer surface area of 30 to 200 $m^2$ per $m^3$ of catalyst required in the present invention is additional to that in the preheat zone. As a result the vessel required for the shift reaction is rather larger than in the process wherein there is no preheat zone. This form of the invention is of particular utility in a process wherein, upstream of the shift reaction, a non-volatile feedstock, for example heavy oil, residual oil, shale, coal, biomass, or waste carbonaceous material such as tyres, is reacted with an oxygen reactant, for example air, oxygen enriched air, or oxygen, followed by cooling, coarse purification from dust, carbon, and tar, and fine purification from sulphur compounds: such purification steps often involve treatment at under 100°C, possibly at sub-ambient temperatures, and are followed by the addition of the steam required in the shift process. In this type of process the inlet carbon monoxide content is typically in the range 15 to 40% by volume on a dry basis in preferred processes where the upstream oxygen reactant is air, but may be higher, for example up to 65%, if pure oxygen is used as the oxygen reactant. As a result of the high inlet carbon monoxide content, the rate of heat evolution in the shift reaction is high, thereby providing some compensation for the increased vessel volume resulting from the presence of a preheat zone. In this process, the maximum temperature in the shift reaction is usually in the temperature range 240 to 310°C and is followed by a falling temperature profile giving an outlet temperature in the aforementioned range 230 to 280°C that is 10 to 30°C below the maximum temperature.

Where the heat exchange is at tube surfaces, the catalyst may be disposed in tubes surrounded by the boiling water. Alternatively the catalyst may be disposed on the shell side of the tubes with the boiling water in the tubes. In the latter case the reactor may be of the type described in EP-A-81948 or EP-A-82609: these references give general directions as to the disposition of the tubes to suit the local levels of heat evolution and, where appropriate, of feed gas preheating. Whichever heat transfer surface configuration is employed, the pressure on the water side is typically in the range 15 to 50 bar abs, but is preferably within 10, particularly within 5, bar of the pressure of the reactants so that the tubes or plates are not highly stressed. It is further preferred that the steam/water pressure is lower than the pressure of the reactants so that accidental rupture of a tube or plate does not result in water contacting the catalyst. If the steam/water pressure is near or below the reactants pressure, the steam generated can not conveniently be used directly as process steam. However the heat evolved in the shift reaction can be used to produce the process steam by indirect heat exchange of the boiling water, or steam produced therefrom, with water at a suitably higher pressure to produce a stream of hot water which is contacted with a dry reactant or reactants upstream of the shift stage so as to effect saturation of that reactant or reactants. Where the water/steam pressure is above the reactants pressure, by controlling the water flow rate in the shift heat exchange so that incomplete vaporisation takes place, the process steam can be produced by contacting the resulting steam/water mixture with a dry reactant, or reactants, so as to saturate the latter. Thus where a gaseous hydrocarbon is reacted with steam as aforesaid upstream of the shift reaction, the steam/water mixture may be used to saturate the gaseous hydrocarbon. Equally where a carbon monoxide-rich gas is produced, for example as a result of a reaction of a non-volatile feedstock with an oxygen reactant as described above, the carbon monoxide-rich gas may be saturated by contact with the steam/water mixture. In a preferred process steam is raised in the shift reactor in a first, closed, circuit and condensed by indirect heat exchange with water in a second circuit; the resulting condensate in the first circuit is returned to the shift reactor as the coolant, while the hot water, which may, optionally, be partially boiling, in the second circuit is contacted with the reactant, e.g. the gaseous hydrocarbon or carbon monoxide-rich gas as aforesaid, so as to saturate the latter.

In addition to copper, the catalyst typically contains zinc oxide and at least one stabilising oxide selected from the group consisting of alumina, vanadia, chromia, rare earth oxides, and calcium aluminate cement. Typically the copper and zinc atoms constitute 20 to 70% of the total number of metal atoms in the catalyst.

The preferred catalyst for use in at least the parts of the bed in which the temperature is over 250°C, and conveniently for the whole bed apart from any non-catalytic zones, comprises copper, zinc oxide, at least one oxide of a trivalent metal having an ionic radius in the range 0.05 to 0.7 nm and magnesia, the proportion of magnesia being such that the magnesium atoms constitute 0.2 to 7% of the total number of copper, zinc, and magnesium atoms. The proportion of magnesia is preferably such that the proportion of magnesium atoms so expressed is over 0.4, and especially in the range 0.6 to 6, %. The proportion of copper is typically such that the proportion of copper atoms, expressed in a similar fashion, is at least 20, especially in the range 30 to 75, %. The proportion of zinc oxide is typically such that the proportion of zinc atoms, expressed in a similar fashion, is at least 10, especially in the range 20 to 75, %. The proportion of trivalent metal oxide is typically such that the proportion of trivalent metal atoms is in the range 1 to 50, especially 3 to 30, % of the total number of copper, zinc, magnesium, and trivalent metal atoms. It is preferred that at least some of the trivalent metal oxide is present as a highly dispersed or combined form such that it cannot be identified as a distinct phase by X-ray crystallography. Some of the trivalent metal oxide, or an oxide of another metal, may be present as an identifiable phase in which case it may act as a diluent, or temperature moderator, or to increase the mechanical strength of the catalyst. Such an oxide, wherein the metal is other than copper, zinc, or magnesium, and that is present as an identifiable phase, may be present to the extent of up to 50% by weight on the total catalyst, calculating the copper metal as copper oxide. The highly dispersed or combined oxide is preferably one or more of alumina, vanadia, and chromia. The identifiable oxide is preferably hydrated, eg hydrated alumina.

The catalyst employed in the shift reaction may be the same throughout the bed if a catalyst of appropriate activity and stability is available, but it may be advantageous to use more than one catalyst, especially if the direction of flow of the reactants is downwards through the bed.

In particular, a shift catalyst of relatively high alumina content, for example 20 to 40% by weight, can be used in the zone where the shift reaction is the fastest and heat evolution the most rapid; a suitable catalyst is a so-called "medium-temperature" shift catalyst, a methanol synthesis catalyst in which 40 to 70% of the number of metal atoms in the catalyst are copper atoms, or a magnesia containing catalyst as described above.

In order to increase the rate of reaction in high temperature zones, in which diffusion limitation is likely to be encountered, the catalyst in such high temperature zones may be units of higher geometric surface area per unit volume, compared to the catalyst units in other zones.

In addition to the zones containing active catalyst, the inlet end of the catalyst bed may have a preheat zone, suitably charged with inert granules such as alpha alumina, to enable the inlet gas, for example a carbon monoxide-rich gas resulting from a partial oxidation stage as aforesaid, to be brought up to the temperature at which the catalyst is active and/or ensure that any water in the gas is fully vaporised.

There may also be a chloride guard bed at the inlet to the shift catalyst. Thus copper containing shift catalysts are de-activated by halides which are often introduced into the process gas stream as halides, particularly as contaminants in the water employed to produce the steam required for the shift reaction and any upstream reaction involving steam, e.g. steam reforming. Halides may also be introduced as contaminants in air added to the process gas stream, e.g. as in secondary reforming where ammonia synthesis gas is being produced. In order to prevent de-activation of the shift catalyst there have been proposals, e.g. in GB-A-1357335, of employing a guard bed of an alkaline material, e.g. alkalised alumina, upstream of the shift catalyst. However such guard beds have not been widely adopted because there is a risk that if water condenses on the alkaline material, halide and alkali will be washed on to the shift catalyst. Copper containing shift catalysts are de-activated by alkali as well as by halide. Condensation of water is liable to occur if the guard bed is not above the dew point of the steam in the process gas. Such conditions are liable to be encountered during start-up of the process and/or where the process has temporarily been halted eg. because of a fault somewhere in the overall process. This has meant that precautions have to be taken to avoid such condensation, e.g. by cycling hot gas through the system and/or effecting start-up at low pressures.

While it is possible to employ a larger volume of shift catalyst than would be required if a guard bed were to be employed, so that the inlet portion of the shift catalyst bed acts in a sacrificial manner and absorbs any poisons in the gas stream so that the remainder of the shift catalyst bed can effect the desired reaction, because of the presence of heat exchange surfaces in the shift reactor in the process of the invention, the aforementioned risks of condensation, e.g. during start-up, can be avoided so that a chloride guard zone, suitably comprising particles carrying a basic alkali, or alkaline earth compound, can be employed. Thus, by providing means to heat the coolant water during start-up and/or during any temporary interruption to the process, the guard bed and catalyst bed can be maintained above the dew point of steam in the reactant gas mixture. Since heat exchange surfaces are present in the reactor, the temperature can be maintained high enough by the boiling water, both during operation of the plant and during any temporary shut-down or during start-up, to avoid condensation of liquid water, which would wash alkali from such a guard bed into the downstream shift catalyst. If desired an alkali trap, for example an adsorptive material such as alumina, may be provided downstream of such a guard bed to adsorb any alkali vaporised from the guard bed.

The invention is illustrated by the following example which gives design conditions for the shift stage in an ammonia plant having a design capacity of 490 t per day.

In this process desulphurised natural gas feedstock is reacted with steam over a supported nickel catalyst in an externally heated tubular reactor and the product of that reaction is reacted with air, brought to equilibrium over a second supported nickel catalyst, heat exchanged with the tubular reactor as the heat source for the latter, and cooled to 265°C in various heat recoveries. The cooled gas is passed over a copper/zinc oxide/magnesia/alumina catalyst as described above and in which, of the total number of metal atoms, 59% are copper, 23.5% are zinc, 15.1% are aluminium, and 2.4% are magnesium. The catalyst is in the form of squat cylindrical pellets of 3.6 mm diameter and 5.4 mm length and is contained in tubes surrounded by water in a pressure shell.

The catalyst pellets are disposed in 850 tubes of internal diameter 73 mm to give a bed of height 3.4 m. The volume of the catalyst bed is thus about 12 $m^3$, so that there is about 55 $m^2$ of heat exchange surface in contact with the gas stream in the bed per $m^3$ of catalyst.

The temperature (T), pressure (P), and flow rates of the components of the gas stream shift at the shift inlet and outlet are set out in the following table.

| | T (°C) | P (bar abs.) | Flow rate (kmol/h). | | | | | | |
|---|---|---|---|---|---|---|---|---|---|
| | | | CO | $CO_2$ | $H_2$ | $CH_4$ | $N_2$ | Ar | $H_2O$ |
| inlet | 265 | 37 | 406 | 198 | 1631 | 23 | 1107 | 42 | 1321 |
| outlet | 250 | 36 | 19 | 585 | 2018 | 23 | 1107 | 42 | 934 |

The gas flow rate is thus 394 kmol per hour per $m^3$ of catalyst. The heat evolution is 4.83 MW; this is transferred to water boiling in the pressure shell under a pressure of 39.4 bar abs., and the steam produced is condensed in indirect heat exchange with water under a pressure of 43 bar abs. which is thereby heated to 241°C for use in saturating the natural gas feedstock. The condensed steam is returned to the pressure shell.

Instead of using 850 tubes of 73 mm internal diameter, a larger number of smaller tubes could be used thus providing a greater heat exchange surface area. Thus there may be 3600 tubes of internal diameter 38 mm, thus providing 105 $m^2$ of heat exchange surface in contact with the gas stream per $m^3$ of catalyst: in this case, to obtain the same volume of catalyst, the bed height is about 2.9 m. Which tube arrangement is preferred depends on the desired flow rate of water in the shell.

In another example, using about 15 $m^3$ of the catalyst pellets disposed in 750 tubes of internal diameter 67 mm to give a bed height of about 5.7 m and providing about 60 $m^2$ of heat exchange surface in contact with the gas stream per $m^3$ of catalyst, and using a gas stream of higher carbon monoxide content, the temperature (T), pressure (P), and flow rates of the components of the gas stream shift at the shift inlet and outlet are set out in the following table.

| | T ($^{\circ}$C) | P (bar abs.) | Flow rate (kmol/h) | | | | | | |
|---|---|---|---|---|---|---|---|---|---|
| | | | CO | $CO_2$ | $H_2$ | $CH_4$ | $N_2$ | Ar | $H_2O$ |
| inlet | 270 | 38 | 450 | 154 | 1675 | 20 | 830 | 10 | 1408 |
| outlet | 245 | 37 | 20 | 584 | 2105 | 20 | 830 | 10 | 978 |

The gas flow rate is thus 303 kmol per hour per $m^3$ of catalyst. The heat evolution is 5.79 MW; this is transferred to water boiling in the pressure shell under a pressure of 35 bar abs.

**Claims**

**Claims for the following Contracting States : AT, BE, CH, LI, LU, SE**

1. A process for the production of a hydrogen containing gas stream comprising subjecting a raw gas containing steam, carbon dioxide, hydrogen, and carbon monoxide, and having a carbon monoxide content of at least 8% by volume on a dry basis, to the catalytic shift reaction at superatmospheric pressure and elevated temperature in a single stage in the presence of a catalyst containing copper metal and at least one oxidic support material in indirect heat exchange with a coolant whereby to reduce the carbon monoxide content to less than 1% by volume on a dry basis, characterised in that
   (a) the process is operated at an outlet temperature in the range 230 to 280 $^{\circ}$C,
   (b) the catalyst bed is equipped with heat exchange tubes and/or plates providing 30 to 200 $m^2$ of heat exchange surface contacted by the gas stream within the catalyst bed per $m^3$ of catalyst and the coolant on the cold side of such tubes and/or plates is boiling water, and
   (c) the gas flow rate through the catalyst is in the range 200 to 800 kmol per hour per $m^3$ of catalyst.

2. A process according to claim 1 wherein the inlet temperature is in the range 240 to 310 $^{\circ}$C and the outlet temperature is 10 to 30 $^{\circ}$C below the inlet temperature.

3. A process according to claim 2 wherein the flow rate of the gas mixture through the catalyst is above 300 kmol per hour per $m^3$ of catalyst.

4. A process according to claim 3 wherein the heat transfer surface contacted by the gas stream within the catalyst bed is above 50 $m^2$ per $m^3$ of catalyst.

5. A process according to claim 1 wherein the inlet temperature is in the range 100 to 240 $^{\circ}$C and upstream of the catalyst there is an inlet zone in indirect heat exchange with the boiling water to serve as a preheat zone.

6. A process according to claim 5 wherein the maximum temperature in the catalyst bed is in the range 240 to 310 $^{\circ}$C and the outlet temperature is 10 to 30 $^{\circ}$C below said maximum temperature.

7. A process according to claim 5 or claim 6 wherein the carbon monoxide content of the raw gas stream is 15 to 65 % by volume on a dry basis.

8. A process according to any one of claims 1 to 7 wherein the pressure of the boiling water is within 10 bar of the pressure of the raw gas stream.

9. A process according to any one of claims 1 to 8 wherein heat is recovered from the boiling water by indirect heat exchange of the boiling water or the steam raised therein with a stream of water, thereby producing a stream of hot water, and at least part of the steam present in the raw gas stream is obtained by contacting the raw gas, or a reactant used to produce the raw gas, with said stream of hot water.

10. A process according to any one of claims 1 to 9 wherein upstream of the catalyst there is a chloride guard bed containing particles carrying a basic alkali, or alkaline earth, compound, in indirect heat exchange with the coolant and means are provided to heat said coolant during start-up and any temporary shut-down of the plant whereby the guard bed may be maintained at a temperature above the dew point of the steam in the raw gas stream during start-up or temporary shut down of the plant.

EP 0 213 840 B1

**Claims for the following Contracting States : DE, FR, GB, IT, NL**

1. A process for the production of a hydrogen containing gas stream comprising subjecting a raw gas containing steam, carbon dioxide, hydrogen, and carbon monoxide, and having a carbon monoxide content of at least 8% by volume on a dry basis, to the catalytic shift reaction at superatmospheric pressure in a single stage in the presence of a bed of a catalyst containing copper metal and at least one oxidic support material at an outlet temperature in the range 230 to 280°C, said bed being equipped with heat exchange tubes and/or plates with boiling water as a coolant on the cold side of said tubes or plates, whereby to reduce the carbon monoxide content to less than 1% by volume on a dry basis, characterised in that
   (a) the heat exchange tubes and/or plates provide 30 to 200 m² of heat exchange surface contacted by the gas stream within the catalyst bed per m³ of catalyst, and
   (b) the gas flow rate through the catalyst is in the range 200 to 800 kmol per hour per m³ of catalyst.

2. A process according to claim 1 wherein the inlet temperature is in the range 240 to 310°C and the outlet temperature is 10 to 30°C below the inlet temperature.

3. A process according to claim 2 wherein the flow rate of the gas mixture through the catalyst is above 300 kmol per hour per m³ of catalyst.

4. A process according to claim 3 wherein the heat transfer surface contacted by the gas stream within the catalyst bed is above 50 m² per m³ of catalyst.

5. A process according to claim 1 wherein the inlet temperature is in the range 100 to 240°C and upstream of the catalyst there is an inlet zone in indirect heat exchange with the boiling water to serve as a preheat zone.

6. A process according to claim 5 wherein the maximum temperature in the catalyst bed is in the range 240 to 310°C and the outlet temperature is 10 to 30°C below said maximum temperature.

7. A process according to claim 5 or claim 6 wherein the carbon monoxide content of the raw gas stream is 15 to 65 % by volume on a dry basis.

8. A process according to any one of claims 1 to 7 wherein the pressure of the boiling water is within 10 bar of the pressure of the raw gas stream.

9. A process according to any one of claims 1 to 8 wherein heat is recovered from the boiling water by indirect heat exchange of the boiling water or the steam raised therein with a stream of water, thereby producing a stream of hot water, and at least part of the steam present in the raw gas stream is obtained by contacting the raw gas, or a reactant used to produce the raw gas, with said stream of hot water.

10. A process according to any one of claims 1 to 9 wherein upstream of the catalyst there is a chloride guard bed containing particles carrying a basic alkali, or alkaline earth, compound, in indirect heat exchange with the coolant and means are provided to heat said coolant during start-up and any temporary shut-down of the plant whereby the guard bed may be maintained at a temperature above the dew point of the steam in the raw gas stream during start-up or temporary shut down of the plant.

**Revendications**
**Revendications pour les Etats contractants suivants : AT, BE, CH, LI, LU, SE**

1. Procédé pour la production d'un courant de gaz contenant de l'hydrogène, comprenant la soumission d'un gaz de départ contenant de la vapeur, du dioxyde de carbone, de l'hydrogène et du monoxyde de carbone et ayant une teneur en monoxyde de carbone d'au moins 8 % en volume en base sèche, à la réaction de déplacement catalytique à une pression superatmosphérique et à une température élevée au cours d'une étape unique en présence d'un catalyseur contenant du cuivre métallique et au moins un matériau de support de type oxyde avec un échange de chaleur indirect avec un réfrigérant pour réduire ainsi la teneur en monoxyde de carbone à moins de 1% en volume en base sèche, caractérisé

7

en ce que

    (a) le procédé est réalisé à une température de sortie dans la gamme de 230 à 280° C,

    (b) le lit de catalyseur est équipé de tubes et/ou de plaques d'échange de chaleur fournissant 30 à 200 m² de surface d'échange de chaleur en contact avec le courant gazeux à l'intérieur du lit de catalyseur par m³ de catalyseur et le réfrigérant sur le côté froid de ces tubes et/ou de ces plaques est de l'eau à l'ébullition, et

    (c) le débit de gaz à travers le catalyseur est dans la gamme de 200 à 800 kmoles par heure et par m³ de catalyseur.

2. Procédé suivant la revendication 1, caractérisé en ce que la température d'entrée est dans la gamme de 240 à 310° C et la température de sortie est de 10 à 30° C inférieure à la température d'entrée.

3. Procédé suivant la revendication 2, caractérisé en ce que le débit du mélange gazeux traversant le catalyseur est supérieur à 300 kmoles par heure et par m³ de catalyseur.

4. Procédé suivant la revendication 3, caractérisé en ce que la surface de transfert de chaleur en contact avec le courant gazeux à l'intérieur du lit de catalyseur est supérieure à 50 m² par m³ de catalyseur.

5. Procédé suivant la revendication 1, caractérisé en ce que la température d'entrée est dans la gamme de 100 à 240° C et qu'il y a en amont du catalyseur, une zone d'entrée en échange de chaleur indirect avec l'eau bouillante pour servir de zone de préchauffage.

6. Procédé suivant la revendication 5, caractérisé en ce que la température maximum dans le catalyseur est dans la gamme de 240 à 310° C et que la température de sortie est de 10 à 30° C inférieure à cette température maximum.

7. Procédé suivant la revendication 5 ou la revendication 6, caractérisé en ce que la teneur en monoxyde de carbone du courant de gaz de départ est de 15 à 65 % en volume en base sèche.

8. Procédé suivant l'une quelconque des revendications 1 à 7, caractérisé en ce que la pression de l'eau bouillante est à moins de 10 bars de la pression du courant de gaz de départ.

9. Procédé suivant l'une quelconque des revendications 1 à 8, caractérisé en ce que de la chaleur est récupérée à partir de l'eau bouillante par échange de chaleur indirect de l'eau bouillante ou de la vapeur générée dans celle-ci avec un courant d'eau, produisant ainsi un courant d'eau chaude, et qu'au moins une partie de la vapeur présente dans le courant de gaz de départ est obtenue par mise en contact du gaz de départ ou d'un réactif utilisé pour produire le gaz de départ, avec ce courant d'eau chaude.

10. Procédé suivant l'une quelconque des revendications 1 à 9, caractérisé en ce qu'en amont du catalyseur il y a un lit de garde de chlorure contenant des particules portant un composé alcalin ou alcalino-terreux basique, en échange de chaleur indirect avec le réfrigérant et que des moyens sont exposés pour chauffer ce réfrigérant pendant le démarrage et un quelconque arrêt temporaire de l'installation, si bien que le lit de garde peut être maintenu à une température supérieure au point de rosée de la vapeur dans le courant de gaz de départ pendant le démarrage ou un arrêt temporaire de l'installation.

**Revendications pour les Etats contractants suivants : DE, FR, GB, IT, NL**

1. Procédé pour la production d'un courant de gaz contenant de l'hydrogène comprenant la soumission d'un gaz de départ contenant de la vapeur, du dioxyde de carbone, de l'hydrogène et du monoxyde de carbone et ayant une teneur en monoxyde de carbone d'au moins 8 % en volume en base sèche, à la réaction de déplacement catalytique à une pression superatmosphérique en une étape unique en présence d'un lit d'un catalyseur contenant du cuivre métallique et au moins un matériau de support de type oxyde à une température de sortie dans la gamme de 230 à 280° C, ce lit étant équipé de tubes et/ou de plaques d'échange de chaleur avec de l'eau bouillante en tant que réfrigérant sur le côté froid de ces tubes ou plaques, de façon à réduire la teneur en monoxyde de carbone à moins de 1 % en volume en base sèche, caractérisé en ce que

(a) les tubes et/ou les plaques d'échange de chaleur fournissent 30 à 200 m² de surface d'échange de chaleur en contact avec le courant de gaz à l'intérieur du lit de catalyseur par m³ de catalyseur, et

(b) le débit de gaz à travers le catalyseur est dans la gamme de 200 à 800 kmoles par heure et par m³ de catalyseur.

2. Procédé suivant la revendication 1, caractérisé en ce que la température d'entrée est dans la gamme de 240 à 310° C et que la température de sortie est de 10 à 30° C inférieure à la température d'entrée.

3. Procédé suivant la revendication 2, caractérisé en ce que le débit du mélange gazeux à travers le catalyseur est supérieur à 300 kmoles par heure et par m³ de catalyseur.

4. Procédé suivant la revendication 3, caractérisé en ce que la surface de transfert de chaleur en contact avec le courant de gaz à l'intérieur du lit de catalyseur est supérieure à 50 m² par m³ de catalyseur.

5. Procédé suivant la revendication 1, caractérisé en ce que la température d'entrée est dans la gamme de 100 à 240° C et qu'en amont du catalyseur, il y a une zone d'entrée en échange de chaleur indirect avec l'eau bouillante pour servir de zone de préchauffage.

6. Procédé suivant la revendication 5, caractérisé en ce que la température maximum dans le lit de catalyseur est dans la gamme de 240 à 310° C et que la température de sortie est de 10 à 30° C inférieure à cette température maximum.

7. Procédé suivant la revendication 5 ou la revendication 6, caractérisé en ce que la teneur en monoxyde de carbone du courant de gaz de départ est de 15 à 65 % en volume en base sèche.

8. Procédé suivant l'une quelconque des revendications 1 à 7, caractérisé en ce que la pression de l'eau bouillante est à moins de 10 bars de la pression du courant de gaz de départ.

9. Procédé suivant l'une quelconque des revendications 1 à 8, caractérisé en ce que de la chaleur est récupérée à partir de l'eau bouillante par échange de chaleur indirect de l'eau bouillante ou de la vapeur générée dans celle-ci avec un courant d'eau, produisant ainsi un courant d'eau chaude, et qu'au moins une partie de la vapeur présente dans le courant de gaz de départ est obtenue par contact du gaz de départ ou d'un réactif utilisé pour produire le gaz de départ, avec ce courant d'eau chaude.

10. Procédé suivant l'une quelconque des revendications 1 à 9, caractérisé en ce qu'en amont du catalyseur, il y a un lit de garde de chlorure contenant des particules portant un composé alcalin ou alcalino-terreux basique, en échange de chaleur indirect avec le réfrigérant et que des moyens sont prévus pour chauffer ce réfrigérant pendant le démarrage et un quelconque arrêt temporaire de l'installation si bien que le lit de garde peut être maintenu à une température supérieure au point de rosée de la vapeur dans le courant de gaz de départ pendant le démarrage ou un arrêt temporaire de l'installation.

**Patentansprüche**

**Patentansprüche für folgende Vertragsstaaten : AT, BE, CH, LI, LU, SE**

1. Verfahren zur Herstellung eines wasserstoffhaltigen Gasstromes, bei dem ein Rohgas, das Wasserdampf, Kohlendioxid, Wasserstoff und Kohlenmonoxid enthält und einen auf das trockene Gas bezogenen Kohlenmonoxidgehalt von wenigstens 8 Volumen% hat, der katalytischen Konvertierungsreaktion bei einem über Atmosphärendruck liegenden Druck und erhöhter Temperatur in einer einzigen Stufe in Gegenwart eines Katalysators, der Kupfermetall und wenigstens ein oxidisches Trägermaterial enthält, in indirektem Wärmeaustausch mit einem Kühlmittel unterzogen wird, um den auf das trockene Gas bezogenen Kohlenmonoxidgehalt auf weniger als 1 Volumen% zu vermindern, **dadurch gekennzeichnet, daß**

(a) das Verfahren bei einer Auslaßtemperatur im Bereich von 230 bis 280 ° C durchgeführt wird,
(b) das Katalysatorbett mit Wärmeaustauschrohren und/oder -platten versehen ist, die je m³ des Katalysators eine Wärmeaustauschfläche von 30 bis 200 m², mit der der Gasstrom innerhalb des Katalysatorbettes in Berührung kommt, bereitstellen, wobei das Kühlmittel an der kalten Seite solcher Rohre und/oder Platten siedendes Wasser ist und

(c) der Durchsatz des Gases durch den Katalysator in dem Bereich von 200 bis 800 kmol je h und je m³ Katalysator liegt.

2. Verfahren nach Anspruch 1, bei dem die Einlaßtemperatur in dem Bereich von 240 bis 310 °C liegt und die Auslaßtemperatur 10 bis 30 °C unter der Einlaßtemperatur liegt.

3. Verfahren nach Anspruch 2, bei dem der Durchsatz der Gasmischung durch den Katalysator oberhalb von 300 kmol je h und je m³ Katalysator liegt.

4. Verfahren nach Anspruch 3, bei dem die Wärmeübertragungsfläche, mit der der Gasstrom innerhalb des Katalysatorbetts in Berührung kommt, oberhalb von 50 m² je m³ Katalysator liegt.

5. Verfahren nach Anspruch 1, bei dem die Einlaßtemperatur in dem Bereich von 100 bis 240 °C liegt und sich stromaufwärts bezüglich des Katalysators eine Einlaßzone befindet, die in indirektem Wärmeaustausch mit dem siedenden Wasser ist und als Vorerhitzungszone dient.

6. Verfahren nach Anspruch 5, bei dem die maximale Temperatur in dem Katalysatorbett im Bereich von 240 bis 310 °C liegt und die Auslaßtemperatur 10 bis 30 °C unter der maximalen Temperatur liegt.

7. Verfahren nach Anspruch 5 oder Anspruch 6, bei dem der auf das trockene Gas bezogene Kohlenmonoxidgehalt des Rohgasstromes 15 bis 65 Volumen% beträgt.

8. Verfahren nach einem der Ansprüche 1 bis 7, bei dem sich der Druck des siedenden Wassers um nicht mehr als 10 bar von dem Druck des Rohgasstromes unterscheidet.

9. Verfahren nach einem der Ansprüche 1 bis 8, bei dem aus dem siedenden Wasser durch indirekten Wärmeaustausch des siedenden Wassers oder des darin erzeugten Wasserdampfes mit einem Wasserstrom Wärme zurückgewonnen wird, wodurch ein Strom von heißem Wasser erzeugt wird, und bei dem wenigstens ein Teil des in dem Rohgasstrom vorhandenen Wasserdampfes erhalten wird, indem das Rohgas oder ein zur Herstellung des Rohgases verwendeter Reaktionsteilnehmer mit dem Strom von heißem Wasser in Berührung gebracht wird.

10. Verfahren nach einem der Ansprüche 1 bis 9, bei dem sich stromaufwärts bezüglich des Katalysators in indirektem Wärmeaustausch mit dem Kühlmittel ein Chloridschutzbett befindet, das Teilchen enthält, die eine basische Alkali- oder Erdalkaliverbindung tragen, und bei dem Mittel zum Erhitzen des Kühlmittels während des Anfahrens und während eines etwaigen vorübergehenden Stillstandes der Anlage bereitgestellt werden, wodurch das Schutzbett während des Anfahrens oder während eines etwaigen vorübergehenden Stillstandes der Anlage bei einer Temperatur oberhalb des Taupunkts des Wasserdampfes in dem Rohgasstrom gehalten werden kann.

**Patentansprüche für folgende Vertragsstaaten : DE, FR, GB, IT, NL**

1. Verfahren zur Herstellung eines wasserstoffhaltigen Gasstromes, bei dem ein Rohgas, das Wasserdampf, Kohlendioxid, Wasserstoff und Kohlenmonoxid enthält und einen auf das trockene Gas bezogenen Kohlenmonoxidgehalt von wenigstens 8 Volumen% hat, der katalytischen Konvertierungsreaktion bei einem über Atmosphärendruck liegenden Druck in einer einzigen Stufe in Gegenwart eines Bettes aus einem Katalysator, der Kupfermetall und wenigstens ein oxidisches Trägermaterial enthält, bei einer Auslaßtemperatur im Bereich von 230 bis 280 °C unterzogen wird, um den auf das trockene Gas bezogenen Kohlenmonoxidgehalt auf weniger als 1 Volumen% zu vermindern, wobei das Bett mit Wärmeaustauschrohren und/oder -platten mit siedendem Wasser als Kühlmittel an der kalten Seite der Rohre oder Platten versehen ist, **dadurch gekennzeichnet, daß**

(a) die Wärmeaustauschrohre und/oder -platten je m³ des Katalysators eine Wärmeaustauschfläche von 30 bis 200 m², mit der der Gasstrom innerhalb des Katalysatorbettes in Berührung kommt, bereitstellen und

(b) der Durchsatz des Gases durch den Katalysator in dem Bereich von 200 bis 800 kmol je h und je m³ Katalysator liegt.

2. Verfahren nach Anspruch 1, bei dem die Einlaßtemperatur in dem Bereich von 240 bis 310 ° C liegt und die Auslaßtemperatur 10 bis 30 ° C unter der Einlaßtemperatur liegt.

3. Verfahren nach Anspruch 2, bei dem der Durchsatz der Gasmischung durch den Katalysator oberhalb von 300 kmol je h und je m³ Katalysator liegt.

4. Verfahren nach Anspruch 3, bei dem die Wärmeübertragungsfläche, mit der der Gasstrom innerhalb des Katalysatorbetts in Berührung kommt, oberhalb von 50 m² je m³ Katalysator liegt.

5. Verfahren nach Anspruch 1, bei dem die Einlaßtemperatur in dem Bereich von 100 bis 240 ° C liegt und sich stromaufwärts bezüglich des Katalysators eine Einlaßzone befindet, die in indirektem Wärmeaustausch mit dem siedenden Wasser ist und als Vorerhitzungszone dient.

6. Verfahren nach Anspruch 5, bei dem die maximale Temperatur im Katalysatorbett im Bereich von 240 bis 310 ° C und die Auslaßtemperatur 10 bis 30 ° C unter der maximalen Temperatur liegt.

7. Verfahren nach Anspruch 5 oder Anspruch 6, bei dem der auf das trockene Gas bezogene Kohlenmonoxidgehalt des Rohgasstromes 15 bis 65 Volumen% beträgt.

8. Verfahren nach einem der Ansprüche 1 bis 7, bei dem sich der Druck des siedenden Wassers um nicht mehr als 10 bar von dem Druck des Rohgasstromes unterscheidet.

9. Verfahren nach einem der Ansprüche 1 bis 8, bei dem aus dem siedenden Wasser durch indirekten Wärmeaustausch des siedenden Wassers oder des darin erzeugten Wasserdampfes mit einem Wasserstrom Wärme zurückgewonnen wird, wodurch ein Strom von heißem Wasser erzeugt wird, und bei dem wenigstens ein Teil des in dem Rohgasstrom vorhandenen Wasserdampfes erhalten wird, indem das Rohgas oder ein zur Herstellung des Rohgases verwendeter Reaktionsteilnehmer mit dem Strom von heißem Wasser in Berührung gebracht wird.

10. Verfahren nach einem der Ansprüche 1 bis 9, bei dem sich stromaufwärts bezüglich des Katalysators in indirektem Wärmeaustausch mit dem Kühlmittel ein Chloridschutzbett befindet, das Teilchen enthält, die eine basische Alkali- oder Erdalkaliverbindung tragen, und bei dem Mittel zum Erhitzen des Kühlmittels während des Anfahrens und während eines etwaigen vorübergehenden Stillstandes der Anlage bereitgestellt werden, wodurch das Schutzbett während des Anfahrens oder während eines etwaigen vorübergehenden Stillstandes der Anlage bei einer Temperatur oberhalb des Taupunkts des Wasserdampfes in dem Rohgasstrom gehalten werden kann.